# EUROPEAN PATENT APPLICATION

(11) **EP 3 461 350 A1**
(43) Date of publication of application: **03.04.2019**
(21) Application number: 17193724.6
(22) Date of filing: 28.09.2017
(51) Int. Cl.: A23L 29/212, A23P 30/20, A23K 50/42, A23L 29/00, A23L 29/10, A23L 7/109, A23L 7/117, A23G 3/34

(54) **A FOOD COMPOSITION WITH ENHANCED SHELF STABILITY**

(71) Applicant: DuPont Nutrition Biosciences ApS, 1411 Copenhagen K (DK)
(72) Inventor: KRISTENSEN, Jakob Broberg, 1411 Copenhagen K (DK); LUND, Casper, 1411 Copenhagen K (DK); HARRIT, Kim Andkjaer, 1411 Copenhagen K (DK); KRAGH, Karsten Matthias, 1411 Copenhagen K (DK); LILLELUND, Vinni Høyer, 1411 Copenhagen K (DK)
(74) Representative: DuPont EMEA

(57) **Abstract**

A flexible starch-based extruded food composition comprising at least one exogenous enzyme capable of hydrolyzing starch and at least one exogenous functional lipid or at least one lipolytic enzyme and at least one functional lipid or at least one exogenous enzyme capable of hydrolyzing starch, at least one lipolytic enzyme and at least one exogenous functional lipid exhibits enhanced shelf stability and/or improved texture.

## Description

### FIELD OF THE INVENTION

The present invention relates to compositions comprising enzymes and emulsifiers providing enhanced shelf stability of flexible starch-based extruded food products having a desired level of softness, texture, and resilience that is maintained during storage.

### BACKGROUND OF THE INVENTION

Starch comprises amylopectin and amylose. Amylopectin is a highly branched carbohydrate polymer with short α-(1→4)-D-glucan chains which are joined together at branch points through α-(1→6) linkages forming a branched and bushlike structure. On average, there is one branch point for every 20-25 α-(1→4) linked glucose residues. In contrast, amylose is a linear structure mainly consisting of unbranched α-(1→4)-D-glucan units. Starches typically contain about 75% amylopectin molecules and about 25% amylose molecules.

When starch granules are heated in the presence of water, they undergo an order-disorder phase transition called gelatinization where liquid is taken up by the swelling granules. Cooling converts the gelatinized phase into a viscoelastic paste or elastic gel depending on the starch concentration. During this process, amylose and amylopectin chains re-associate to form a more ordered structure. With time, more associations are formed and the chains become even more ordered. It is believed that associations of amylopectin chains with a degree of polymerization of 15-20 lead to a thermoreversible, quasicrystalline structure.

It is known that the quality of baked bread products gradually deteriorates during storage. The crumb loses its softness and elasticity and becomes firm and crumbly. The so-called staling is primarily due to the detrimental retrogradation of starch which is understood to be a transition of starch gelatinized during baking from an amorphous state to a quasicrystalline state. It has been found that reducing the length of the amylopectin chains counteracts the crystallization process and retards the staling of bread. Enzymes capable of hydrolyzing starch (amylases) have been used for many years to hydrolyze the side chains of amylopectin, thereby providing an antistaling effect.

The use of lipolytic enzymes (lipases) to retard staling of bread and increase bread softness is also well known. Lipases use endogenous polar and non-polar lipids present in flour as substrates to generate polar hydrolysis products, lysophospholipids and lyso-glycolipids that have surface-active properties and act as emulsifiers in the dough in a similar way as added emulsifiers/functional lipids (e.g. DATEM).

Shelf stability of flexible starch-based extruded food products is generally dependent on maintaining a suitable compliant, but not too soft, texture with high resilience (ability to regain its shape upon deformation) for several months in sealed packaging at ambient temperatures. However, a general problem associated with these products is hardening during storage under typical storage conditions, even without loss of moisture.

Although not bound by theory, it is possible that hardening during storage may be related to changes in starch structure of such highly starch-based food products.

It is known to add amylase as an extrusion aid in the preparation of extruded starch-containing pet food (termed 'kibbles') though this is mainly regarded as a means of reducing the amount of added water and lowering energy consumption at the extruder (J. Froetschner, Feed Tech 10.10.2006, www.AllAboutFeed.net, pp. 15-24). The quality of the resulting kibbles is not tested although the author notes that the kibbles produced with addition of amylase were smaller in diameter and length. The texture of the kibble during storage was not tested. A product application guideline for Extruzyme® Pro DS (an amylase produced by Novozymes) which is used as an extrusion aid in the production of pet food to reduce the viscosity of the pet food formulation in the extruder indicates that addition of amylase also contributes to improving the softness and shelf freshness of semi-moist pet kibbles.

### SUMMARY OF THE INVENTION

In the course of research leading to the present invention, in-line processing of the starch-based raw materials by enzymatic treatment was tested in the type of pre-conditioner usually used together with extruders in the production of extruded starch-based food products. Conventional wisdom dictates that the holding time in the pre-conditioner is insufficient to achieve efficient enzyme treatment, but surprisingly it was found possible to achieve significant improvements over a reference product (containing the same ingredients as the test product except for the enzyme and also produced in the same pre-conditioner/extruder setup). Both resistance to increased bend and cut hardness during 6-month storage and retention of bend resilience during the period were improved, to the point of being statistically constant from start to end.

It was surprisingly found, however, that combining an enzyme treatment with addition of a functional lipid led to an even further improvement of the textural stability, thereby achieving lower initial bend hardness and improved stability and levels of bend resilience and cut hardness over a reference product that contained neither enzyme nor a functional lipid.

Accordingly, the present invention relates to a flexible starch-based extruded food composition with enhanced shelf stability or improved texture, the composition comprising a mixture of 20-98% w/w starch, 0-30 % w/w protein, 0.5-20% w/w moisture and
(i) at least one exogenous enzyme capable of hydrolyzing starch and at least one exogenous functional lipid; or
(ii) at least one exogenous lipolytic enzyme and at least one exogenous functional lipid; or
(iii) at least one exogenous enzyme capable of hydrolyzing starch, at least one exogenous lipolytic enzyme and at least one exogenous functional lipid.

In another aspect, the invention relates to a process for preparing an extruded starch-based food composition as described herein, said process comprising:
a. providing a mixture of starch (in a concentration corresponding to 20-98% w/w in the extruded food composition), optionally protein (in a concentration corresponding to 0-30% w/w of the extruded food composition) and
   a. at least one exogenous enzyme capable of hydrolyzing starch and at least one exogenous functional lipid; or
   b. at least one exogenous lipolytic enzyme and at least one exogenous functional lipid; or
   c. at least one exogenous enzyme capable of hydrolyzing starch, at least one exogenous lipolytic enzyme and at least one exogenous functional lipid;
b. adding moisture to the mixture of step (a) with mixing and
c. extruding the mixture of pre-conditioning step (b) to form an extruded food composition.

The procedure of step (b) is known in the art as pre-conditioning where the ingredients mixed in step (a) are subjected to specific conditions of time, temperature and moisture to provide a moist mixture suitable for extrusion.

### DETAILED DESCRIPTION OF THE INVENTION

### Definitions

As used herein, the term "starch-based" refers to a food composition that contains a sufficient amount of starch to exhibit the problem of hardening during storage. Typically, the concentration of starch in the composition is at least 20% w/w. The starch may either be present as a component of flour made from cereals, such as maize, wheat, rice, oat or barley, in admixture with other flour components, or the starch may be isolated from flour or from starchy vegetables such as potatoes. It should be noted that the present extruded food composition is not a baked product such as bread or a dough used for making bread.

As used herein, the term "exogenous" when used to characterize the enzyme and the functional lipid is intended to indicate that the enzyme or functional lipid included in the present food composition is not an endogenous component of the starch or flour or the protein ingredient (if present), but is derived from an external source.

As used herein, the term "flexible" means able to bend upon applied force without breaking within a prescribed threshold value and optionally exhibiting a measurable level of elasticity, i.e. partially or fully regaining its original shape after the bending force is released. This is most commonly described experimentally by bend testing in so-called texture profile analysis, which will be familiar to those skilled in the art. The flexibility also pertains to tensional ductility ("stretch"). Quantitative measures of such bend or tension flexibility is most often related to relative hardness, structural resilience and relative force measurements. Sensory qualities associated with such flexible food products can be "long texture", "tough", "chewy" etc.

As used herein, the term "functional lipid" refers to a class of compounds with surface-active properties that are used, for instance, as emulsifiers in oil in water emulsions and for other food applications. Functional lipids are included in the present composition to form complexes with amorphous starch occurring as the result of the process known as gelatinization. The complexation ensures prolonged retention of the amorphous state of the starch which is theorized to be at the root of textural stability.

As used herein, the term "shelf stability" (or "storage stability") refers to the relative stability over time of the extruded food composition as determined by texture profile analysis (TPA) for 3-point bend hardness and resilience, and cutting force in knife probe TPA, e.g. as described in Example 2 below.

### Embodiments

In an embodiment, the enzyme capable of hydrolyzing starch may be any polypeptide having enzymatic activity capable of hydrolyzing one or more components of starch and may include (bacterial or fungal) α-amylases (EC 3.2.1.1), β-amylases (EC 3.2.1.2), maltogenic amylases, non-maltogenic exoamylases (e.g., enzymes releasing oligosaccharides of lengths corresponding to 3, 4, and/or 5 glucose units), glucoamylases, and pullulanases. In a preferred aspect, the enzyme capable of hydrolyzing starch is a non-maltogenic exoamylase enzyme classified under Enzyme Commission number 3.2.1.60 that catalyzes the hydrolysis of 1,4-α-D-glucosidic linkages in amylaceous polysaccharides to remove successive maltotetraose residues from the non-reducing chain ends. In a preferred embodiment, the non-maltogenic exoamylase is derived from *Pelomonas saccharophila* (Genbank Accession No. P22963.1). The use of non-maltogenic amylases to retard retrogradation of starch in baked products is described in, e.g. WO 99/50399 and WO 2005/003339.

In an embodiment, the lipolytic enzyme may be a polypeptide having lipolytic activity. In a preferred embodiment, the lipolytic enzyme is a triacylglycerol lipase (EC 3.1.1.3) and preferably has significant activity towards monoacylglycerols, diacylglycerols, triacylglycerols, and sn1-esters of polar lipids such as diacylphopholipids, and diacylglycolipids. In a further preferred embodiment, the lipolytic enzyme may be a phospholipase A1 (EC 3.1.1.32) or a galactolipase (EC 3.1.1.26). In a further preferred embodiment, the lipolytic enzyme may be a fungal lipase, e.g. derived or obtained from *Fusarium heterosporum* or *Fusarium oxysporum.* A lipase derived from *Fusarium heterosporum* is characterized by higher activity on polar lipids (phospholipids and glycolipids) compared to triglycerides (this enzyme is disclosed in US 7,622,290 and EP 1722636B1, and is designated KLM-1). The use of this lipase for various food applications, in particular to improve the properties of dough and baked products, is also disclosed in EP 1722636B1.

In the present food composition, the enzyme (whether amylase or lipase or a combination thereof) is typically present in an amount defined by enzymatic activity.

Amylase is typically used at 100-300 Betamyl units per kg. One Bentamyl unit is defined as enzyme activity degrading 0.0351 mmole per minute of PNP-coupled maltopentaose so that 0.0351 mmole PNP per minute can be released by excess α-glucosidase in the assay mix. The assay mix contains 50 µl 50 mM Na-citrate, 5 mM CaCl2, pH 6.5, with 25 µl enzyme sample and 25 µl Betamyl substrate (Glc-PNP and α-glucosidase) available from Megazyme, Ireland (1 vial dissolved in 10 ml water). The assay mix is incubated for 30 minutes at 40°C and then stopped by adding 150 µl Tris. Absorbance at 420 nm is measured using an ELISA-reader and the Betamyl activity is calculated based on Activity = A420*d in Betamyl units/ml of the enzyme sample assayed.

Lipase is typically used at 1000-3000 TIPU units per kg. Lipase activity (TIPU) may be determined using the following assay :
Substrate : 0.6% L-α-phosphatidylcholine 95% Plant (Avanti, cat. #441601), 0.4% TRITON™-X 100 (Sigma X-100) and 5 mM CaCl₂ are dissolved in 0.05 M HEPES buffer pH 7.

Assay procedure : Samples, calibration sample and control sample are diluted in 10 mM HEPES pH 7.0 containing 0.1% TRITON™ X-100. Analysis is carried out using a Konelab Autoanalyser (Thermo, Finland). The assay is run at 30°C. 34 µl substrate is thermostatted for 180 seconds at 30°C before adding 4 µl of enzyme sample. Enzymation is carried out for 600 seconds. The amount of free fatty acid liberated during enzymation is measured using the NEFA kit available from WakoChemicals GmbH, Germany. After enzymation, 113 µl NEFA-HR(1) is added and the mixture is incubated for 300 seconds. After that 56 µl NEFA-HR(2) is added and the mixture is incubated for 300 seconds. OD 520 is then measured. Enzyme activity (µmol FFA/min · ml) is calculated based on a calibration curve made from oleic acid. Enzyme activity (TIPU) is calculated as micromole free fatty acid produced per minute under assay conditions.

NEFA-HR(1) is composed of 50 mM phosphate buffer pH 7.0 contining 0.53 U/ml acyl-CoA synthase, 0.31 mM coenzyme A, 4.3 mM adenosine 5-triphosphate disodium salt, 1.5 mM 4-amino-antipyridine, 2.6 U/ml ascorbate oxidase and 0.062% sodium azide.

NEFA-HR(2) is composed of 2.4 mM 3-methyl-N-ethyl-N-(E-hydroxyethyl)-aniline, 12 U/ml acyl-CoA oxidase and 14 U/ml peroxidase.

The exogenous functional lipid included in the present food composition may suitably be selected from the group consisting of the group consisting of propylene glycol monostearate (PGMS), sodium stearoyl lactylate (SSL), calcium stearoyl lactylate (CSL), monoglycerides, diglycerides, monodiglycerides, polyglycerol esters, lactic acid esters of monoglycerides, lactic acid esters of diglycerides, lactic acid esters of monodiglycerides, polysorbate, sucrose esters of monoglycerides, sucrose esters of diglycerides, sucrose esters of monodiglycerides, diacetyl tartaric acid esters of monoglycerides, diacetyl tartaric acid esters of diglycerides, diacetyl tartaric acid esters of monodiglycerides (DATEM), citric acid esters of monoglycerides, citric acid esters of diglycerides, citric acid esters of monodiglycerides (CITREM), lecithins, and combinations thereof.

Preferred exogenous functional lipids may be selected from the group consisting of monoglycerides, monodiglycerides, diacetyl tartaric acid esters of monoglycerides, diacetyl tartaric acid esters of diglycerides and diacetyl tartaric acid esters of monodiglycerides.

In the present food composition, the exogenous functional lipid may favourably be included in a concentration of 0.1-1% w/w of the composition, preferably a concentration of 0.2-0.5% w/w of the composition.

The present food composition may further comprise one or more common food ingredients, for instance salts, minerals, sugars, sweeteners, preservatives, vitamins, polysaccharides, antioxidants, acidulants, stabilizers, thickeners, dietary fibers, colourants, binders, spices, fruits, nuts, vegetables, plant extracts, meat components, flavours, oils or fats, as required to obtain the desired texture, taste, odour, nutrient value or mouthfeel.

The food composition may be any extruded food product containing a high amount of starch and therefore at risk of hardening during storage. Typical food compositions are selected from the group consisting of fresh pasta, soft and chewable confectionery products, snack bars, such as cereal or energy bars or savoury snacks, such as Chinese La Tiao hot sticks.

The term "pet food" is used to include a variety of substances that can be ingested by non-human animals and may include, for example dog or cat food. The pet food may be in a variety of formats including wet pet food (e.g. chunks in gravy) or semi-moist pet food (e.g. soft chewy pellets) or pet treats (with the exception of pet treats intended to improve the dental care of pets).

The present food composition is characterized by increased shelf storage stability as observed by texture profile analysis (carried out as described in Example 2 below) in a three-point bend setup showing
- less than 100% maximum increase (average below 50% increase) in hardness (H1, maximum Force (g) of first compression) during first 6 months of storage, while reference products exhibit 100-700% increase (average 200% increase) in hardness during the same period, and
- statistically identical (α=0.95) hardness H1 at 6-month storage versus initial hardness, while reference samples exhibit statistically significant difference (α=0.95) between initial and 6-month hardness.

In step (b) of the present process, the enzyme(s) and the functional lipid may be added to the mixture of dry components (i.e. starch, optionally protein and one or more other food ingredients as indicated above) at the pre-conditioner inlet. Moisture in form of steam and ambient process water is also added at the beginning of pre-conditioning. In one embodiment, all the components of the mixture may be combined prior to introduction into the pre-conditioner.

In another embodiment, the functional lipid may be mixed with the starch and optionally the protein prior to introduction into the pre-conditioner, and the enzyme(s) are added to the pre-conditioner and mixed with the mixture of the other components in the pre-conditioner/conditioner.

As used herein, the term "pre-conditioner" refers to an apparatus used to subject the present food composition to conditioned treatment (in terms of time, temperature and moisture treatment, typically with mixing) prior to extrusion to obtain a product with the right moisture content and the right product temperature to facilitate subsequent production of the food composition in the extruder. Examples of suitable pre-conditioners are available from companies such as Wenger (www.wenger.com/new-development.php); Clextral (www.clextral.com/technologies-and-lines/equipment/the-preconditioner); Bühler (ww.buhlergroup.com/global/en/products/ecotwin-twin-screw-extrusion-system.htm#.WD2UzLAzXGg).

In one embodiment, the conditioning time ranges from 0.5 to 30 minutes (inside the pre-conditioner), while the temperature ranges from 15 to 100 °C. Water (typically in the form of steam) is introduced to the pre-conditioner to adjust temperature, water content and/or density of the material at the die. In a preferred embodiment, the condition time is 2 to 20 minutes at a temperature range of 50 °C to 90 °C prior to extrusion, more preferably about 2 to 15 minutes at a temperature range of 60 °C to 80 °C prior to extrusion.

Once the moist mixture has passed through the pre-conditioner, accounting for appropriate holding time, the mixture flows continually into an extruder where it is mechanically and thermally processed in a matter of minutes before being shaped at the exit die of the extruder and cut into the desired size by a cutting implement attached to the extruder or place suitably on/at a conveyor in proximity to the extruder outlet die.

As used herein, the term "extruder" refers to the apparatus used to cook and extrude the conditioned food composition such that it is mechanically mixed, heated and shaped into products of desirable shape and size. Examples of suitable extruders are available from companies such as Wenger, Clextral or Bühler. In one aspect, the extruder is Clextral BC 45 Twin-screw Extruder. A typical food extruder comprises an inlet screw, repeating patterns of multiple steam locks (for example, four) followed by single flight screws, a steam lock followed by a double-cutting flight screw, and one steam lock followed by a cut-flight cone screw. The shapes and sizes of the orifice(s) and the shaft speed(s) may be varied to achieve the desired product. Temperatures are typically controlled and adjusted through the various zones to achieve the desired product. The combination of high shear mixing from screws and restrictions to flow yields both heat and internal pressure, while optional heating and cooling elements further contribute to the cooking and temperature control. In one embodiment, the screw speed ranges from 100 to 1200 rpm and the temperatures within the various zones of the extruder are typically controlled to range from 70 °C to 150 °C. Residence time in the extruder typically ranges from 0.5 to 15 minutes.

Following extrusion, the extruded food composition is typically dried, cut and/or cooled to achieve the desired density, diameter, length, shape, moisture, and/or dissolution characteristics. The cut food product is then transferred to packaging systems before being ready for transport and storage as a finished packaged food product.

The present extruded food composition is characterized by improved storage stability when compared (under essentially the same conditioning and extrusion treatments) to compositions lacking the enzyme and emulsifier combinations described herein.

The present invention is described in further detail in the following examples which are not in any way intended to limit the scope of the invention as claimed.

### EXAMPLE 1

### PRODUCING AN EXTRUDED FOOD COMPOSITION

A model food composition of the invention was produced by a combination of pre-conditioning and extrusion following the set-up described below. Such a process will be recognizable to a person skilled in the art of food production.

Single-screw pre-conditioner: In-line processing of the raw materials by enzyme treatment in the type of pre-conditioner usually used with the extruders applied in producing such food products.

Feed rate = 25 kg/h of 96% corn/wheat flour mix, 3% protein of animal origin and preservative (model system). Dry formulated enzymes and functional lipids (distilled monoglycerides) were included in the powder mix of flour, protein and optionally preservative. In order to ensure incubation time for added enzymes to exert an effect on processability or product quality, the extrusion setup was re-arranged to incorporate a customized pre-conditioner with 13 min residence time, 60 °C approximate temperature. Preconditioner speed = 2.5 Hz.

Water was added at (6.5 kg/h) the "water inlet" (alternatively, liquid enzyme or functional lipid formulations may be added together with the water), and powder was added at "powder inlet". Steam (1 kg/h) added shortly after "powder inlet". By adjusting amount of steam and water added to the powder feed it was possible to adjust powder temperature out of the preconditioner. It was seen that by adding more steam both the barrel and the powder temperature would increase and when reducing steam again both temperatures would decrease again.

Extruder type: Clextral BC 45, Twin Screw, Co-Rotating Cooker Extruder. 5 barrels, Length-to-Diameter ratio 23. Die plate with cooling, outlet Ø 22 mm. Single die 4 * 20 mm letter-box slit.

Extruded samples were tempered and air-dried over night before being packaged in aluminium foil pouches for storage trials at room temperature (-17 °C). At 2, 4, 8 and 27 weeks of storage, sealed bags of each experimental sample were opened immediately before being submitted to texture analysis as described in Example 2.

### EXAMPLE 2

### TEXTURE ANALYSIS METHOD

Texture analysis methods are well-known to those of ordinary skill in the art (see Szczesniak et al., J. Food Sci (1963) 28:397-403); Pons and Fiszman, J. Texture Studies (1996) 27(6): 597-624; and Mochizuki, Y. "Unit H2.3 Texture Profile Analysis", in Current Protocols in Food Analytical Chemistry (2001), John Wiley & Sons Inc, New York, NY, Ronald E. Wrolstad (Editor).

Texture of the samples prepared in Example 1 was evaluated by Texture Profile Analysis (TPA) set up for either 3-point bend (a) or cutting force (b) employing a Stable Micro Systems TA-XTplus texture analyzer using a 30 kg load cell using, respectively, a) 6 mm (shortest dimension) broad probe centered above two supports 100 mm apart and compressing (10 mm travel, 1 mm/second) on a 150 mm sample of chew treat positioned on the supports; and b) a cutting probe is forced perpendicularly into the treat sample (10 mm travel, 1 mm/second).

From texture profile analysis the following parameters were extracted for each replicate of treated samples (number of replicates n=5): For 3-point bend (a) - Hardness and Resilience. For cutting force test (b) - Knife force. These parameters were measured at 2, 4, 8, and 27 weeks of storage at room temperature (17 °C).

3-point bend testing is used to describe the flexibility of the treats, where Hardness should remain virtually constant through storage to prevent harmful effects of eating the food product, as increased hardness is often connected to glassy structure that can break or chip into sharp edges when bitten, or the food product may turn hard enough for gums to be injured or teeth to chip. Meanwhile, Resilience describes how the tested object is able to regain or re-approximate its original structure following a deformation (here: bend through 10 mm compression at mid-point between 2 supports). Ideally, Resilience should approach a value of 1.0, i.e. full structural regain, but this is usually not possible; rather, Resilience should be as high as possible for any extruded food composition of the present invention.

The 3-point bend method is based on single-downstroke/upstroke version of Texture Profile Analysis, where the probe is forced to compress once (downstroke) to a travel distance of 10 mm and then returned (upstroke) to its original position, during which Force (g) is measured as a function of time, as the probe compresses at 1 mm/second and is tracked for its travel back (upstroke) at an identical rate (but not necessarily identical distance).

Hardness (maximum force of the 1st compression) is the peak force that occurs during the first compression. The hardness need not occur at the point of deepest compression, although it typically does for most products.

Resilience is calculated by dividing the upstroke energy of the first compression by the downstroke energy of the first compression. Resilience is defined as the ability of a food composition to regain its original shape upon deformation. Resilience is measured on the withdrawal of the first penetration, before the waiting period is started. Resilience can be measured with a single compression; however, the withdrawal speed must be the same as the compression speed.

The Cutting force test, measuring Knife Force, approximates to the resistance of the sample towards a sharp cutting implement (or teeth biting into the food composition). Hence, the texture parameter Knife Force is the peak force for a sharp blade-type probe being driven 10 mm (1 mm/second) into the sample placed on a horizontal support. As a certain level of Knife Force is necessary for the appropriate toughness of the food product, Knife Force should ideally be constant during storage, without increasing nor declining with age.

### EXAMPLE 3

### AMYLASE + FUNCTIONAL LIPID V REFERENCE PERFORMANCE

Best stability of the tested treatments was achieved by combining amylase (200 Betamyl units/kg) with a functional lipid (distilled monoglyceride 0.5%) during preconditioning whereby initial Hardness was reduced and remained below that of amylase only (200 Betamyl units/kg) and lipase only (1890 TIPU/kg) treated samples or a Reference containing no enzyme(s) and no functional lipid throughout the 27-week period, cf. Table 1 below.

**Table 1: Bend Hardness (g)**

| Treatment | 2 weeks | 4 weeks | 8 weeks | 27 weeks | % change (w2 to w8) | % change (w2 to w27) |
|---|---|---|---|---|---|---|
| Amylase + funct. lipid | 2029 | 2132 | 2579 | 3198 | 32.5 | 66.9 |
| *Std. dev.* | *445* | *369* | *241* | *562* | *30.5* | *18.0* |
| Amylase A | 3655 | 4652 | 4741 | 5062 | 32.7 | 44.1 |
| *Std. dev.* | *639* | *654* | *410* | *864* | *22.3* | *42.5* |
| Lipase | 3058 | 3622 | 3184 | 3894 | 6.6 | 28.9 |
| *Std. dev.* | *517* | *722* | *288* | *376* | *19.8* | *13.7* |
| Reference | 2584 | 3383 | 4918 | 7063 | 112 | 234 |
| *Std. dev.* | *1047* | *1312* | *926* | *1132* | *74* | *181* |

Amylase and functional lipid treated samples exhibited generally higher Resilience in bend test compared to a Reference containing no enzyme(s) or functional lipid, cf. Table 2 below.

**Table 2: Bend Resilience (unit-less ratio)**

| Treatment | 2 weeks | 4 weeks | 8 weeks | 27 weeks | % change (w2 to w8) | % change (w2 to w27) |
|---|---|---|---|---|---|---|
| Amylase + funct.lipid | 0.500 | 0.498 | 0.522 | 0.557 | 6.13 | 5.76 |
| *Std. dev.* | *0.058* | *0.092* | *0.022* | *0.003* | *18.23* | *3.14* |
| Reference | 0.408 | 0.404 | 0.444 | 0.510 | 10.0 | 26.9 |
| *Std. dev.* | *0.059* | *0.057* | *0.040* | *0.038* | *10.9* | *14.9* |

Samples treated with amylase and functional lipid did not show statistically significant difference in Knife Force between week 2 and week 27, whereas a Reference containing no enzyme(s) or functional lipid exhibited significantly higher Knife Force by week 8, cf. Table 3 below.

**Table 3: Knife Force (g)**

| Treatment | 2 weeks | 4 weeks | 8 weeks | 27 weeks | % change (w2 to w8) | % change (w2 to w27) |
|---|---|---|---|---|---|---|
| Amylase + funct.lipid | 14446 | 12696 | 14495 | 15499 | 3.1 | 23.7 |
| *Std. dev.* | *2805* | *744* | *968* | *539* | *19.5* | *6.2* |
| Reference | 14869 | 14274 | 17790 | 21082 | 22 | 39 |
| *Std. dev.* | *2402* | *2811* | *1531* | *2469* | *21* | *23* |

### EXAMPLE 4 (PROPHETIC)

### FRESH PASTA WITH ENZYME(S) ± FUNCTIONAL LIPID

Soft fresh pasta (high starch, relatively high moisture) can be protected from hardening in sealed controlled-atmosphere packaging under refrigerated storage by the use of an enzyme (amylase and/or lipase) and a functional lipid so as to maintain an attractive, "fresh", flexible texture that will not break into smaller pieces under transport or handling. The enzymes and functional lipids are added during the moist/wet processing steps (cf. Example 1) to modify structural constituents of the pasta mixture before being extruded/shaped into the final fresh pasta product, ready for packaging in controlled-atmosphere containers. TPA can be conducted as described in Example 2.

### EXAMPLE 4 (PROPHETIC)

### SOFT LIQUORICE STICK WITH ENZYME(S) ± FUNCTIONAL LIPID

Soft and chewable confectionary products with high starch content and relatively high moisture content are prone to hardening during storage. Adding an amylase and/or lipase and functional lipid during processing can help extend the shelf life by protecting against hardening. Such confectionary products are typically extruded, examples being soft liquorice or toffee sticks or filled (co-extruded) liquorice sticks with soft, flavoured centre fillings. Before extrusion, the high starch confectionary products are subjected to a moist/wet mixting or pre-conditioning unit operation (cf. Example 1), during which the enzyme and functional lipid act as a processing aid to obtain the desired functionality after extrusion. TPA can be conducted as described in Example 2.

## Claims

1. A flexible starch-based extruded food composition with enhanced shelf stability or improved texture, the composition comprising a mixture of 20-98% w/w starch, 0-30% w/w protein, 0.5-20% w/w moisture and
(i) at least one exogenous enzyme capable of hydrolyzing starch and at least one exogenous functional lipid; or
(ii) at least one exogenous lipolytic enzyme and at least one exogenous functional lipid; or
(iii) at least one exogenous enzyme capable of hydrolyzing starch, at least one exogenous lipolytic enzyme and at least one exogenous functional lipid.

2. A food composition according to claim 1, wherein the exogenous enzyme capable of hydrolyzing starch is selected from the group consisting of α-amylases, β-amylases, maltogenic amylases, non-maltogenic exoamylases, glucoamylases, and pullulanases.

3. A food composition according to claim 1 or 2, wherein the exogenous enzyme capable of hydrolyzing starch is a non-maltogenic exoamylase (EC 3.2.1.60).

4. A food composition according to claim 3, wherein the non-maltogenic exoamylase is derived from *Pelomonas saccharophila.*

5. A food composition according to any one of claims 1-4, wherein the lipolytic enzyme is a lipase, glycolipase, galactolipase or phospholipase.

6. A food composition according to any one of claims 1-5, wherein exogenous enzyme capable of hydrolyzing starch is present in an amount equivalent to 100-300 Betamyl units per kg.

7. A food composition according to claim 5, wherein the lipolytic enzyme is a triacylglycerol lipase (EC 3.1.1.3) or a fungal lipase derived from *Fusarium heterosporum* or *Fusarium oxysporum*, a galactolipase (EC 3.1.1.26) or a phospholipase A1 (EC 3.1.1.32).

8. A food composition according to claim 7, wherein the lipolytic enzyme is KLM-1.

9. A food composition according to any one of claims 1-5, wherein exogenous lipolytic enzyme is present in an amount equivalent to 1000-3000 TIPU per kg.

10. A food composition according to any one of claims 1-9, wherein the functional lipid is selected from the group consisting of propylene glycol monostearate (PGMS), sodium stearoyl lactylate (SSL), calcium stearoyl lactylate (CSL), monoglycerides, diglycerides, monodiglycerides, polyglycerol esters, lactic acid esters of monoglycerides, lactic acid esters of diglycerides, lactic acid esters of monodiglycerides, polysorbate, sucrose esters of monoglycerides, sucrose esters of diglycerides, sucrose esters of monodiglycerides, diacetyl tartaric acid esters of monoglycerides, diacetyl tartaric acid esters of diglycerides, diacetyl tartaric acid esters of monodiglycerides (DATEM), citric acid esters of monoglycerides, citric acid esters of diglycerides, citric acid esters of monodiglycerides (CITREM), lecithins, and combinations thereof.

11. A food composition according to claim 10, wherein the functional lipid is selected from the group consisting of monoglycerides, monodiglycerides, diacetyl tartaric acid esters of monoglycerides, diacetyl tartaric acid esters of diglycerides and diacetyl tartaric acid esters of monodiglycerides.

12. A food composition according to any one of claims 1-11, wherein the exogenous functional lipid is present in a concentration of 0.1-1 % w/w of the composition, preferably a concentration of 0.2-0.5% w/w of the composition.

13. A food composition according to any one of claims 1-12 further comprising one or more common food ingredients, for instance salts, minerals, sugars, sweeteners, preservatives, vitamins, polysaccharides, antioxidants, acidulants, stabilizers, thickeners, dietary fibers, colourants, binders, spices, fruits, nuts, vegetables, plant extracts, meat components, flavours, oils or fats.

14. A food composition according to any one of claims 1-13 selected from the group consisting of fresh pasta, soft and chewable confectionery products, snack bars, such as cereal or energy bars, savoury snacks, such as Chinese La Tiao hot sticks, pet food or pet treats.

15. A food composition according to any one of claims 1-14, **characterized by** increased shelf storage stability as observed by texture profile analysis in a three-point bend setup showing
- less than 100% maximum increase (average below 50% increase) in hardness (H1, maximum Force (g) of first compression) during first 6 months of storage, while reference products exhibit 100-700% increase (average 200% increase) in hardness during the same period, and
- statistically identical (α=0.95) hardness H1 at 6-month storage versus initial hardness, while reference samples exhibit statistically significant difference (α=0.95) between initial and 6-month hardness.

16. A process for preparing an extruded starch-based food composition according to any one of claims 1-15, said process comprising:
a. providing a mixture of starch (in a concentration corresponding to 20-98% w/w in the extruded food composition), optionally protein (in a concentration corresponding to 0-30% w/w of the extruded food composition) and
a. at least one exogenous enzyme capable of hydrolyzing starch and at least one exogenous functional lipid; or
b. at least one exogenous lipolytic enzyme and at least one exogenous functional lipid; or
c. at least one exogenous enzyme capable of hydrolyzing starch, at least one exogenous lipolytic enzyme and at least one functional lipid;
b. adding moisture to the mixture of step (a) with mixing (pre-conditioning) and
c. extruding the mixture of pre-conditioning step (b) to form an extruded food composition.

17. The process of claim 16, wherein the extruded food composition has increased shelf storage stability as observed by texture profile analysis in a three-point bend setup showing
- less than 100% maximum increase (average below 50% increase) in hardness (H1, maximum Force (g) of first compression) during first 6 months of storage, while reference products exhibit 100-700% increase (average 200% increase) in hardness during the same period, and
- statistically identic2al (α=0.95) hardness H1 at 6-month storage versus initial hardness, while reference samples exhibit statistically significant difference (α=0.95) between initial and 6-month hardness.

18. The process of claim 16 wherein pre-conditioning step (b) is carried out at a temperature of 40 °C to 100 °C for 0.5 minutes to 30 minutes.

19. The process of any one of claims 16-18 wherein step (c) is carried out at a temperature of 70 °C to 150 °C for 0.5 minutes to 15 minutes, preferably at a temperature of 50 °C to 90 °C for 2 to 20 minutes, more preferably at a temperature of 60 °C to 80 °C for 2 to 15 minutes, optionally followed by cutting, cooling and drying operations before the food composition is packaged.

20. The process of any one of claims 16-19, wherein one or more common food ingredients, for instance salts, minerals, sugars, sweeteners, preservatives, vitamins, polysaccharides, dietary fibers, antioxidants, spices, fruits, nuts, vegetables, plant extracts, meat ingredients, flavours, oils or fats, are added to the mixture of step (a).

21. The process of any one of claims 16-20, wherein moisture is added in step (b) in a concentration corresponding to 0.5-20% w/w in the extruded food composition.

22. The process of any one of claims 16-21, wherein moisture is added in step (b) and the extruded food composition is subsequently dried so that the concentration of moisture is 0.5-20% w/w.
